# EUROPÄISCHE PATENTANMELDUNG

(11) **EP 2 301 393 A1**
(43) Veröffentlichungstag der Anmeldung: **30.03.2011**
(21) Anmeldenummer: 10179389.1
(22) Anmeldetag: 24.09.2010
(51) Int. Cl.: A47J 27/62, F24C 7/08, H05B 1/02

(54) **Kochsystem**

(30) Priorität: 28.09.2009 DE 102009043246
(71) Anmelder: Herchenbach, Wolfgang, Dr., D-86938 Schondorf/Ammersee (DE)
(72) Erfinder: Herchenbach, Wolfgang, Dr., D-86938 Schondorf/Ammersee (DE)
(74) Vertreter: Betten & Resch

(57) **Zusammenfassung**

Es wird ein aus Induktionskochfeld und Kochgeschirr mit Einstellthermostat bestehendes Kochsystem beschrieben, bei dem eine besonders hohe Temperatur-Regelgenauigkeit dadurch erreicht wird, dass die Einstellübersetzung des vom Temperaturfühler bewegten Schaltmagneten im Thermostaten mindestens 100-fach ist und der Einfluß der Hysterese des unter der Kochfläche befindlichen Reedkontakts auf die Regelgenauigkeit durch eine elektrische Kompensationsschaltung weitgehend ausgeglichen ist.

Das Kochgeschirr mit Einstellthermostat kann von einem wärmeisolierenden Außentopf umschlossen sein und der Einstellthermostat kann durch eine permanentmagnetisch arbeitende Einstellvorrichtung von außen betätigt werden, ohne dass die Wand des Außentopfs durchbrochen werden muß.

## Beschreibung

Die Erfindung betrifft ein Kochsystem, bestehend aus einem Kochfeld, das vorzugsweise als Induktionskochfeld ausgebildet ist, und einem Kochgeschirr mit einem einstellbaren Thermostaten, dessen Temperaturfühler am Rand oder in einer Bohrung des Kochgeschirrbodens gut wärmeleitend angeordnet ist und über eine Temperatureinstellvorrichtung mit Hebelübersetzung oder über eine Zahnradübersetzung einen Permanentmagneten bewegen kann, der auf den Reedkontakt eines unter der Kochfläche angeordneten Reedrelais mit Reedrelaisspule einwirken kann, d.h. den Reedkontakt betätigen kann und so die Leistung des Induktionsgenerators ein- oder ausschaltet, an den die Induktionsspule angeschlossen ist.

Solche bekannten Kochsysteme (EP 0 621 739) arbeiten insofern nicht völlig befriedigend, als die Regelgenauigkeit der Temperatur des Kochgeschirrbodens mit ca. +/- 10°C nicht ausreicht, um empfindliches Kochgut vitaminschonend und auf den Punkt genau zubereiten zu können. Auch gelingt es damit bisher nicht, am Siedepunkt wässriges Kochgut gleichmäßig am schonenden, schwach sprudelnden Kochen zu halten.

Aufgabe der Erfindung ist es, die Regelgenauigkeit der Kochgeschirrboden-Temperatur um etwa eine Größenordnung, d.h. auf ca. +/- 1°C zu verbessern.

Kochgeschirre mit solcher Regelgenauigkeit können dann auch als hermetisch verschlossene Druckkochtöpfe eingesetzt werden, bei denen, wenn die Temperatur richtig eingestellt ist, im praktischen Betrieb die Kochleistung nicht mehr zurückgestellt werden muß, wenn der Drucktopf anfängt zu pfeifen.

Der Erfindung liegt die Erkenntnis zugrunde, dass dieses Ziel erreicht werden kann, wenn die Einstellübersetzung, d.h. der Weg des Permanentmagneten im Verhältnis zu dem des Temperaturfühlers, der als hydraulischer Fühler mit Druckdose oder als Invarstab oder als Bimetall ausgebildet sein kann, mindestens 100-fach ist, und wenn die Auswirkung der Hysterese des Reedkontakts, d.h. der Differenz zwischen seiner Ansprech-Magnetfeldstärke und seiner Abfall-Magnetfeldstärke, stark vermindert wird. Die Hysterese liegt normalerweise bei ca. 10 bis 20%. Darunter liegende Werte sind in gleichmäßiger Qualität nur schwer herzustellen und bieten außerdem die Gefahr schleichender Kontaktgabe.

Die Aufgabe, trotz normaler Hysterese des Reedkontakts eine Regelgenauigkeit von ca. +/- 1°C zu erreichen, wird erfindungsgemäß dadurch erreicht, das der Reedkontakt derart eingerichtet ist, dass er gleichzeitig mit dem Schalten der Leistung des Induktionsgenerators einen durch die Reedrelaisspule fließenden Gleichstrom aus- oder einschaltet, dessen Magnetfeld zusätzlich zu dem Magnetfeld des Permanentmagneten auf den Reedkontakt einwirkt, und zwar um einen Magnetfeldbetrag, der annähernd der Hysterese des Reedkontakts entspricht.

Dadurch wird die Hysterese weitgehend ausgeglichen.

Um ein Flattern der Regelung zu vermeiden muß die durch das Schalten des Reedkontakts ausgelöste Wirkung der Reedrelaisspule verzögert einsetzen oder allmählich anwachsen. Diesem Zweck kann beispielsweise ein Kondensator dienen, der parallel zur Reedrelaisspule liegt und über einen Widerstand aufgeladen wird, der groß gegenüber dem Widerstand der Reedrelaisspule ist, wobei der Kondensator so bemessen ist, dass er seine volle Spannung ca. eine bis wenige Sekunden nach Öffnen des Reedkontakts erreicht. Dadurch wird die bei Erreichen der Solltemperatur, d.h. mit dem ersten Öffnen des Reedkontakts einsetzende Schaltimpulsfolge zur Aufrechterhaltung der Solltemperatur bestimmt.

Bei Einsatz eines Induktionskochfeldes, das wesentlich schneller reagiert als ein Strahlungskochfeld, ist es zweckmäßig, eine Steuervorrichtung vorzusehen, die derart eingerichtet ist, dass die vom Induktionsgenerator auf die Induktionsspule übertragene Leistung durch die Steuervorrichtung, z.B. einen entsprechend programmierten Mikroprozessor im Induktionsgenerator derart gesteuert wird, dass sie mit Schließen des Reedkontakts allmählich im Verlauf von ca. einer bis wenigen Sekunden von ca. 10% auf 100% ansteigt und mit Öffnen des Reedkontakts entsprechend allmählich wieder abklingt. Dadurch werden ruckartige Belastungen des Netzes, die sich durch sichtbare Lichtschwankungen störend bemerkbar machen können, auch bei sehr kurzer Schaltimpulsfolge ausgeschlossen.

Um ein sauberes Schalten des Reedkontakts zu sichern, sollte in an sich bekannter Weise ein parallel zum Reedkontakt liegendes RC-Glied vorgesehen werden, dessen Kapazität klein gegenüber der des parallel zur Reedrelaisspule liegenden Kondensators und dessen Widerstand deutlich kleiner ist als der der Reedrelaisspule.

Der Einstellthermostat kann als Teil eines Kochgeschirrgriffes ausgebildet werden, der dann bis dicht über die Kochfläche herunterreichen muß. Um beobachten zu können, wenn bei Erreichen der eingestellten Solltemperatur der Permanentmagnet beginnt sich zu heben, ist es zweckmäßig, ein durchsichtiges Fenster vorzusehen.

Aus Gründen der Wärmeisolation und der besseren Unterbringung des Einstellthermostaten kann man den Innentopf in einen Außentopf aus Metall setzen. Das spart Strom, ist kochtechnisch vorteilhaft, weil die Wände des Innentopfes warmer werden, und kann teilweise sogar den Betrieb des Ventilators der Induktionskochstelle überflüssig machen. Eine ähnliche Anordnung ist in der EP 0 922 424 B1 beschrieben. Dort bestand der Außentopf als "wärmeisolierender Übertopf" allerdings aus Kunststoff, was allein schon aus der Wandstärke des Übertopfs und des umlaufendes Griffwulstes erkennbar ist. Dies führte in der Praxis mehrfach zur Zerstörung des "Übertopfes", weil dieser irrtümlich immer wieder statt auf eine Induktionskochstelle auf eine Strahlungsheizungs-Kochstelle gestellt wurde, deren Temperatur den "Übertopf" zerstörte. Diese Auswirkung eines Irrtums kann nicht mehr eintreten, wenn der Außentopf aus Metall besteht. Der Außentopf ist mit dem Innentopf am oberen Rand wasserdicht und vakuumdicht verschweißt oder verbördelt, wie dies im Prinzip von sogenannten Simmertöpfen her bekannt ist. Im Unterschied zu Simmertöpfen, deren Außentopf bei Induktionstauglichkeit ferromagnetisch ist, muß beim Erfindungsgegenstand der Außentopf jedoch unmagnetisch sein, weil sich auf der Induktionskochstelle der temperaturgeregelte Boden des Innentopfes erhitzen soll.

In weiterer Ausbildung der Erfindung weist der Innentopf am Ort des Einstellthermostaten einen verbreiterten Kragen und der Außentopf eine bis auf die Kochfläche herunterreichende Ausbuchtung auf, in welcher der Einstellthermostat untergebracht ist.

Der Raum zwischen Innentopf und Außentopf mit Ausbuchtung ist zur besseren Wärmeisolation evakuiert, wie dies von stählernen Thermosflaschen her bekannt ist.

Um die Einstellspindel des Einstellthermostaten, der sich in dem evakuierten Raum zwischen Innentopf und der Ausbuchtung des Außentopfes befindet, von außen betätigen zu können, würde man normalerweise eine abgedichtete Welle durch die Wand des Außentopfes führen. Eine solche Durchführung würde jedoch die Gefahr bieten, dass bei etwaigem Defekt der Dichtung im Dauerbetrieb in der Spülmaschine Wasser in den evakuierten Raum zwischen Innentopf und Außentopf gezogen wind, das bei späterer Erhitzung über den Siedepunkt hinaus hohen Druck aufbauen und zur Explosion führen könnte. Deshalb ist die weitere Ausbildung der Erfindung gekennzeichnet durch eine Vorrichtung, durch welche die Einstellspindel des Einstellthermostaten ohne Durchbruch in der Wand der Ausbuchtung des Außentopfes permanentmagnetisch von außen betätigt werden kann. Damit ist der evakuierte Raum zwischen Innentopf und Außentopf hermetisch verschlossen und ebenso sicher wie jede stählerne Thermosflasche.

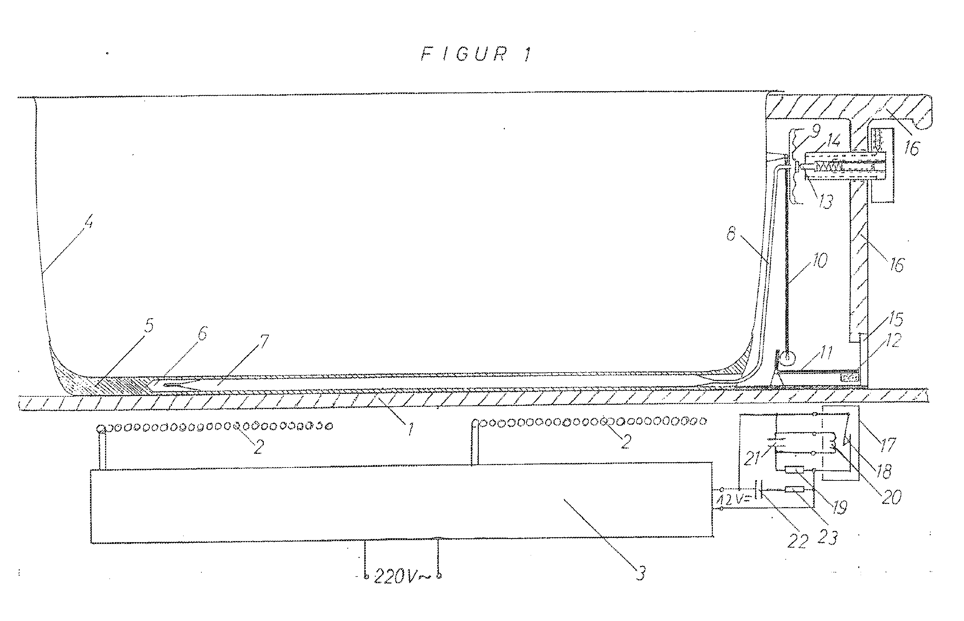

Figur 1 zeigt schematisch ein Ausführungsbeispiel des Gegenstandes der Erfindung nach Ansprüchen 1 bis 5. Auf einem Induktionskochfeld, bestehend aus der Kochfläche 1, der Induktionsspule 2 und dem Induktionsgenerator 3 steht der Kochtopf 4, der einen dicken Boden 5 zur guten Temperaturverteilung sowie eine lange Bohrung 6 zur Aufnahme des hydraulischen Temperaturfühlers 7 aufweist. Der Temperaturfühler 7 wirkt über die Kapillare 8 auf die Ausdehnungsdose 9 ein. Diese ist an dem Hebel 10 befestigt, der mit ca. zwanzigfacher Übersetzung auf den Hebel 11 einwirkt, der selbst ca. zehnfach übersetzt ist und an seinem Ende den Permanentmagneten 12 trägt und diesen mit insgesamt ca. zweihundertfacher Übersetzung bewegen kann. Sobald der Mittelpunkt der Ausdehnungsdose 9 bei steigender Temperatur zur Anlage an der (zur Vermeidung von Überbeanspruchung federnd gelagerten) Spitze 13 der Einstellspindel 14 kommt, bewegt sich der Permanentmagnet 12 also mit ca. zweihundertfacher Geschwindigkeit nach oben. Um die Bewegung des Permanentmagneten 12 beobachten zu können ist das transparente Fenster 15 vorgesehen. Die Teile 7 bis 15 bilden den Einstellthermostaten und sind in dem als Gehäuse ausgebildeten Griff 16 untergebracht.

Direkt unter der Kochfläche 1 und unter dem Permanentmagneten 12 ist ein Reedrelais 17 angeordnet. Wenn der Permanentmagnet 12, wie gezeichnet, unten steht, ist der Reedkontakt 18 des Reedrelais 17 geschlossen, die Zwölf-Volt-Steuer-Gleichspannung des Induktionsgenerators 3 kurzgeschlossen und damit die Induktionsleistung eingeschaltet. Sobald die an der Einstellspindel 14 eingestellte Solltemperatur erreicht ist, kommt der Mittelpunkt der Ausdehnungsdose 9 zur Anlage an der Spitze 13 der Einstellspindel 14, so dass der Permanentmagnet 12 angehoben wird, wobei der Reedkontakt 18 sich öffnet und die Leistung des Induktionsgenerators 3 abschaltet. Gleichzeitig beginnt ein in der Reedrelaisspule 20 allmählich ansteigender Gleichstrom über den Widerstand 19 und die Spule 20 des Reedrelais 17 zu fließen, dessen Magnetfeld zusätzlich zu dem des Permanentmagneten 12 auf den Reedkontakt 20 einwirkt, und zwar mit einem Endbetrag, der annähernd der Hysterese des Reedkontakts 18 entspricht. Dieser Endbetrag wird erreicht, sobald der Kondensator 21 voll aufgeladen ist. Der Widerstand 19 muß groß gegenüber dem der Reedrelaisspule 20 und der Kondensator 21 muß so bemessen sein, dass er seine volle Spannung eine bis wenige Sekunden nach Öffnen des Reedkontakts 18 erreicht. Inzwischen hat sich der Kochtopfboden 5 wieder etwas abgekühlt, so dass der Permanentmagnet 12 sich wieder etwas absenkt und den Reedkontakt 18 wieder einschaltet, und zwar in einer etwas höheren Position, als er dies ohne den in der Reedrelaisspule 20 fließenden Gleichstrom tun würde. Mit Schließen des Reedkontakts 18 entlädt sich der Kondensator 21 schnell wieder über die Reedrelaisspule 20, und das Regelspiel beginnt von Neuem.

So wird durch die hohe Übersetzung des Thermostaten und die weitgehende Kompensation der Hysterese des Reedkontakts 18 durch die Beschaltung der Reedrelaisspule 20 eine bisher nicht für möglich gehaltene Regelgenauigkeit erreicht. Die exakte Bemessung des Widerstands 19 und des Kondensators 21 hängt von den Eigenschaften des Reedrelais 17 und der gewünschten Schaltimpulsdauer, d.h. von der gewünschten Regelgenauigkeit ab.

Um den Störeinfluß des hochfrequenten Induktions-Streufeldes auf den Reedkontakt 18 zu vermindern und ein sauberes Schalten sicherzustellen, liegt parallel zum Reedkontakt 18 ein RC-Glied. Die Kapazität seines Kondensators 22 sollte klein gegenüber der des Kondensators 21, und sein Widerstand 23 deutlich kleiner als der der Reedrelaisspule 20 sein.

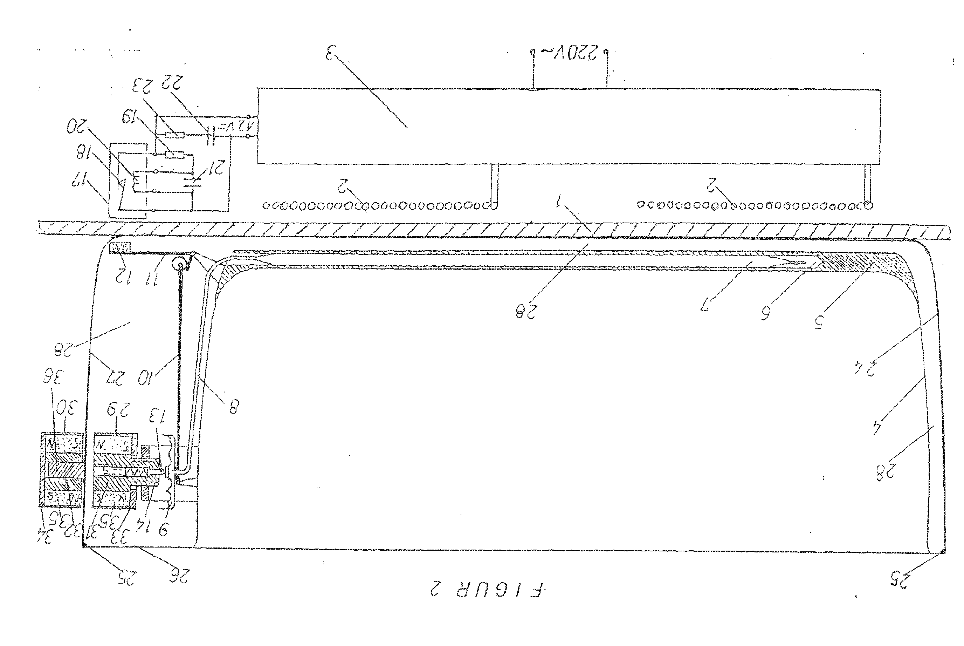

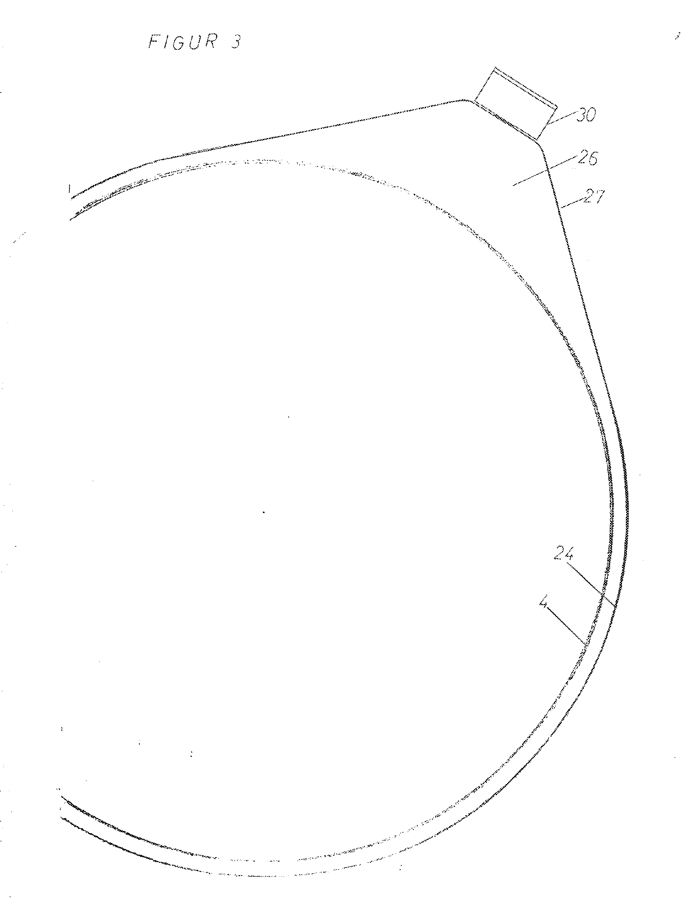

Die Figuren 2 und 3 zeigen schematisch die Weiterentwicklung des Erfindungsgegenstandes nach den Ansprüchen 6 bis 9, wobei in allen drei Figuren die gleichen Bezeichnungen verwendet sind. Figur 2 entspricht Figur 1, erweitert um den Außentopf 24, 27 und die permanentmagnetische Betätigung 29, 30 der Einstellspindel 14. Figur 3 zeigt eine Draufsicht auf die Gesarntanordnung von Innentopf 4 mit Kragen 27 und Außentopf 24 mit Ausbuchtung 27 und permanentmagnetischem Einstellknopf 30.

Der Außentopf 24 mit Ausbuchtung 27 ist an seinem oberen Rand mit dem oberen Rand des Innentopfes 4 und seinem am Ort des Einstellthermostaten verbreiterten Kragen 26 durch die Schweißnaht 25 wasser- und vakuumdicht verbunden. Der Einstellthermostat befindet sich in dem evakuierten Raum 28 zwischen Innentopf 4 und der Ausbuchtung 27 des Außentopfes 24.

Die Vorrichtung zur permanentmagnetischen Betätigung der Einstellspindel 14 des Einstellthermostaten durch die geschlossene Wand der Ausbuchtung 27 des Außentopfes 24 hindurch besteht aus den Teilen 29 und 30. Diese enthalten vier Permanentmagnete 35 als Rundstabmagnete, die in Bohrungen der unmagnetischen Trägerteile 31 und 32 gesteckt sind und von den ferromagnetischen Rückschlußplatten 33 und 34 gehalten werden. Das äußere Teil 30 dient als Einstellknopf für die Temperatur und ist auf dem an die Außenwand 27 geschweißten Zapfen 36 leicht drehbar gelagert.

Es ist offensichtlich, dass das Teil 29 durch die Anziehungskräfte der vier Permanentmagnete 35 jeder Drehbewegung des Einknopfes 30 folgt und damit die Einstellspindel 14 betätigt, ohne dass beide Teile 29, 30 sich berühren, so dass die Außenwand 27 nicht durchbrochen werden muß.

## Patentansprüche

1. Kochsystem, bestehend aus einem Induktionskochfeld mit einer Kochfläche (1), einer Induktionsspule (2) sowie einem Induktionsgenerator (3) und einem Kochgeschirr (4) mit einem einstellbaren Thermostaten (7 bis 16), dessen Temperaturfühler (7) am Rand oder in einer Bohrung (6) des Kochgeschirrbodens (5) gut wärmeleitend angeordnet ist und über eine Temperatureinstellvorrichtung (14), (13) mit Hebelübersetzung (10), (11) oder über eine Zahnradübersetzung einen Permanentmagneten (12) bewegen kann, der auf den Reedkontakt (18) eines unter der Kochfläche (1) angeordneten Reedrelais (17) mit Reedrelaisspule (20) einwirken und damit den Reedkontakt betätigen kann, und so die Leistung des Induktionsgenerators (3) ein- oder ausschaltet, an den die Induktionsspule (2) angeschlossen ist, **dadurch gekennzeichnet, dass** die Einstellübersetzung, d.h. der Weg des Permanentmagneten im Verhältnis zu dem des Temperaturfühlers, mindestens 100-fach ist und dass der Reedkontakt (18) derart eingerichtet ist, dass er gleichzeitig mit dem Schalten der Leistung des Induktionsgenerators (3) einen durch die Reedrelaisspule (20) fließenden Gleichstrom aus- oder einschaltet, dessen Magnetfeld zusätzlich zu dem Magnetfeld des Permanentmagneten (12) auf den Reedkontakt (18) einwirkt, und zwar um einen Magnetfeldbetrag, der annähernd der Hysterese des Reedkontakts (18) entspricht.

2. Kochsystem nach Anspruch 1, **gekennzeichnet durch** einen Kondensator (21), der parallel zur Reedrelaisspule (20) liegt und über einen Widerstand (19) aufgeladen wird, der groß gegenüber dem Widerstand der Reedrelaisspule (20) ist, wobei der Kondensator (21) so bemessen ist, dass er seine volle Spannung ca. eine bis wenige Sekunden nach dem Öffnen des Reedkontakts (18) erreicht.

3. Kochsystem nach Anspruch 1 oder 2, **gekennzeichnet durch** eine Steuervorrichtung, die derart eingerichtet ist, dass die vom Induktionsgenerator (3) auf die Induktionsspule (2) übertragene Leistung **durch** die Steuervorrichtung, z.B. einen entsprechend programmierten Mikroprozessor im Induktionsgenerator (3) derart gesteuert wird, dass sie mit Schließen des Reedkontakts (18) allmählich im Verlauf von ca. einer bis wenigen Sekunden von ca. 10% auf 100% ansteigt und mit Öffnen des Reedkontakts (18) entsprechend allmählich wieder abklingt.

4. Kochsystem nach Anspruch 2 oder Anspruch 3 i.V.m. Anspruch 2, **gekennzeichnet durch** ein parallel zum Reedkontakt (18) liegendes RC-Glied, dessen Kapazität (22) klein gegenüber der Kapazität des Kondensators (21) und dessen Widerstand (23) deutlich kleiner als der der Reedrelaisspule (20) sind.

5. Kochsystem nach einem der Ansprüchen 1 bis 4, **dadurch gekennzeichnet, dass** der Einstellthermostat als Teil eines Kochgeschirrgriffes (16) ausgebildet ist, der ein durchsichtiges Fenster (15) zur Beobachtung der Bewegung des Permanentmagneten (12) enthält.

6. Kochsystem nach einem der Ansprüche 1 bis 4, bei dem der Kochtopf (4) sich als Innentopf in einem Außentopf (24) befindet, wobei der Außentopf (24) aus für Indtiktionsfelder durchlässigem, d.h. unmagnetischem Metall besteht.

7. Kochsystem nach Anspruch 6, bei dein der Außentopf (24) mit dem Innentopf (4) am oberen Rand wasser- und vakuumdicht durch eine Schweißnaht (25) oder eine Verbördelung verbunden ist, wobei der Innentopf (4) am Ort des Einstellthermostaten einen verbreiterten Kragen (26) und der Außentopf (24) eine bis auf die Kochfläche (1) herunterreichende Ausbuchtung (27) aufweist, in welcher der Einstellthermostat untergebracht ist.

8. Kochsystem nach Anspruch 7, **dadurch gekennzeichnet, dass** der Zwischenraum (28) zwischen Innentopf (4) und Außentopf (24) mit Ausbuchtung (27) evakuiert ist.

9. Kochsystem nach Anspruch 8, **gekennzeichnet durch** eine Vorrichtung (29), (30), **durch** welche die Einstellspindel (14) des Einstellthermostaten ohne Durchbruch in der Wand der Ausbuchtung (27) des Außentopfes (24) permanentmagnetisch von außen betätigt werden kann.
